# EUROPÄISCHE PATENTSCHRIFT

(11) **EP 1 057 321 B1**
(45) Veröffentlichungstag und Bekanntmachung des Hinweises auf die Patenterteilung: **09.01.2002**
(21) Anmeldenummer: 99910093.6
(22) Anmeldetag: 28.01.1999
(51) Int. Cl.: H04N 1/00, H04N 1/107

(54) **MOBILFUNKGERÄT MIT FAKSIMILE-ABTASTZEILE**
MOBILE TELEPHONE WITH A FACSIMILE SCANNING LINE
TELEPHONE MOBILE AVEC LIGNE DE LECTURE DE TELECOPIEUR

(30) Priorität: 25.02.1998 DE 19807906
(43) Veröffentlichungstag der Anmeldung: 06.12.2000
(73) Patentinhaber: SIEMENS AKTIENGESELLSCHAFT, 80333 München (DE)
(72) Erfinder: BIEDERMANN, Rolf, D-48683 Ahaus (DE)
(86) Internationale Anmeldenummer: DE9900228
(87) Internationale Veröffentlichungsnummer: WO9944357

(56) Entgegenhaltungen:
- DE-A- 19 547 809
- DE-U- 29 717 027
- US-A- 5 646 402
- PATENT ABSTRACTS OF JAPAN vol. 017, no. 081 (E-1321), 18. Februar 1993 & JP 04 278766 A (SONY CORP), 5. Oktober 1992

## Beschreibung

Die Erfindung bezieht sich auf ein Mobilfunkgerät mit einem Hochfrequenzteil, mit einem digitalen Signalprozessor, mit einer Antenne, mit gegebenenfalls einem Audioteil mit einer Hörkapsel und einem Mikrophon und mit einer Faksimile-Abtastzeile, nach Folgend auch Abtasteinrichtung genannt, die über eine Bildverarbeitung mit dem Signalprozessor in Verbindung steht, wobei Bildverarbeitung und Signalprozessor dazu eingerichtet sind, ein von der Abtastzeile abgetastetes Bild zumindest teilweise zwischenzuspeichern und in digitaler Form über den Hochfrequenzteil auszusenden.

In Mobilfunknetzen sowie mit diesen in Verbindung stehenden Funknetzen besteht das Bedürfnis, neben einer Sprachübertragung auch Dokumente oder Bilder zu übertragen. Dazu werden in Festnetzen die bekannten Faxgeräte als autarke Bildsende-Empfänger verwendet, wogegen im Mobilfunkbereich eine Dokumentenübertragung üblicherweise unter Zuhilfenahme eines PCs, insbesondere eines "Laptop-PCs", erfolgt. Will man Dokumente übermitteln, die auf dem PC nichtelektronisch erstellt wurden, so benötigt man zusätzlich einen Scanner, der ein Dokument abtastet und in digitaler Form an den PC weiterleitet, wo das Dokument zunächst gespeichert wird. Erst dann kann das Dokument über den Mobilfunk per Telefax übermittelt werden. Die Übermittlung eines Dokumentes mit Hilfe eines Mobilfunkgerätes, im allgemeinen Sprachgebrauch auch "Handy" genannt, setzt somit das Vorhandensein eines PCs voraus, der jedoch nur selten mitgeführt wird.

Aus der DE-195 47 809 A1. ist ein Mobilfunkgerät mit integriertem Faxgerät bekannt, bei dem eine Bildabtastzeile mit Beleuchtung, die als Teil von sogenannten Handscannern zur Bildabtastung für Personal Computer handelsüblich ist, an eine Gehäuselängsseite des Mobilfunkgerätes untergebracht ist. Darüber hinaus ist in dem Mobilfunkgerät ein Weggeber für diese Bildabtastzeile zu dieser benachbart montiert. Die Ausgänge der Bildabtastzeile und des Weggebers sind in dem Mobilfunkgerät zu einem Steuerbaustein geführt, der die erzeugten Signale einem Verarbeitungsbaustein zur Verarbeitung der Bildinformation abgibt. Von dem Verarbeitungsbaustein können die Signale direkt oder über einen Speicherbaustein an einen Signalbaustein abgegeben werden. Der Signalbaustein ist über einen Kanalcodierer, einen Sendeverstärker und einen Umschalter mit einer Antenne zur Abstrahlung eines Funksignals verbunden.

Aus der DE-297 17 027 U1 ist ein Handy mit einer Scaneinrichtung vorgesehen, bei dem das Handy über eine Scan-Taste vom Normal- in den Scan-Betrieb umschaltbar ist. Die Scaneinrichtung ist an der Unterseite des Handys angeordnet und erstreckt sich über die gesamte Längsrichtung des Handys. Die Scaneinrichtung ist weiterhin lösbar am Handy anbringbar.

Aus der US5,464,402 ist ein Handscanner bekannt, mit zwei nebeneinander gelagerten in einer gleichen Ebene parallel verschiebbaren Haltevorrichtungen, die jeweils mindestens eine Abtasteinrichtung sowie einem mit der Abtasteinrichtung verbundenen Signalumsetzer mit zugehöriger Bildverarbeitungseinheit aufweist, wobei die Halterungen derart gegeneinander verschoben werden können, daß der Handscanner von einer leicht zu transportierenden Minimalgröße auf eine einer einzuscannenden Vorlage entsprechenden Größe eingestellt werden kann.

Die der Erfindung zugrundeliegende Aufgabe besteht darin, die Abtastung und Übermittlung von in Papierform vorliegenden, größeren Dokumenten - z. B. im A4-Format - mit Hilfe eines Mobilfunkgerätes, trotz der geringen Abmessungen des Mobilfunkgerätes, auf einfachste Art und ohne zusätzliche Geräte zu ermöglichen.

Diese Aufgabe wird, ausgehend von einem Mobilfunkgerät der eingangs genannten Art erfindungsgemäß dadurch gelöst, daß die Abtasteinrichtung derart ausklappbar oder ausziehbar ist, daß sie ausgeklappt bzw. ausgezogen eine durchgehende Abtastzeile aufweist deren Gesamtlänge im ausgeklappten oder ausgezogenen Zustand größer ist als die größte Geräteabmessung.

Die Erfindung gibt somit die Möglichkeit, durch einfaches händisches Abtasten mit Hilfe einer Abtasteinrichtung ein Dokument über das Mobilfunkgerät per Telefax an einen Empfänger zu übermitteln. Bei den meisten Mobilfunksystemen ist zwar die Übermittlung von Zeichen im Rahmen beispielsweise eines SMS-Dienstes möglich, doch setzt dies eine händische Eingabe der einzelnen Buchstaben und Ziffern an der Tastatur des Mobilfunkgerätes voraus und die Übermittlung komplexerer Strukturen, die nicht bloß aus Buchstaben und Ziffern bestehen, ist überhaupt ausgeschlossen.

Es ist an dieser Stelle anzumerken, daß die Kombination eines Scanners mit einem Funkgerät als solche aus der EP 0 697 670 A1 bekanntgeworden ist, allerdings in einem völlig anderen Zusammenhang. Dieses Dokument beschreibt die Benutzung von tragbaren Sende-Empfängern in Einkaufszentren, um den Kunden eine ständige Informationsmöglichkeit zu geben, bei welcher auch der Scanner als Barcode-Leser für auf den Waren angebrachte Balkencodes verwendet wird.

Wenngleich die Anordnung der Abtasteinrichtung nicht notwendigerweise gerätegebunden ist, so ist es doch für die Handhabung von großer Annehmlichkeit, wenn die Abtasteinrichtung gerätefest angeordnet ist.

In Hinblick auf die üblichen Proportionen von Mobilfunkgeräten und das Erfordernis einer möglichst breiten Abtastung empfiehlt es sich, wenn die Abtasteinrichtung in einer Seitenfläche des Gerätes untergebracht ist.

In Hinblick auf die händische Abtastung, die auch zu unterschiedlichen Abtastgeschwindigkeiten führt, empfiehlt es sich, wenn die Abtasteinrichtung zumindest an einem Ende einen mit einer Rolle gekoppelten Wegstreckenindexgeber aufweist.

Bei einer bevorzugten Ausführungsform, welche die händische Abtastung besonders berücksichtigt, ist vorgesehen, daß die Bildverarbeitung eine Bildaufbereitung, einen Bildspeicher sowie einen Faxdatengenerator besitzt. Dabei werden zweckmäßigerweise die Signale der Abtastzeile sowie des Indexgebers der Bildaufbereitung zugeführt.

Die Erfindung samt weiteren Vorteilen ist im folgenden an Hand einer beispielsweisen Ausführungsform näher erläutert, die in der Zeichnung dargestellt ist. In dieser zeigen
Fig.1 eine perspektivische schematische Ansicht eines Mobilfunkgerätes nach der Erfindung mit ausgeklappter Abtasteinrichtung und
Fig.2 ein schematisches Blockschaltbild eines Mobilfunkgerätes nach der Erfindung.

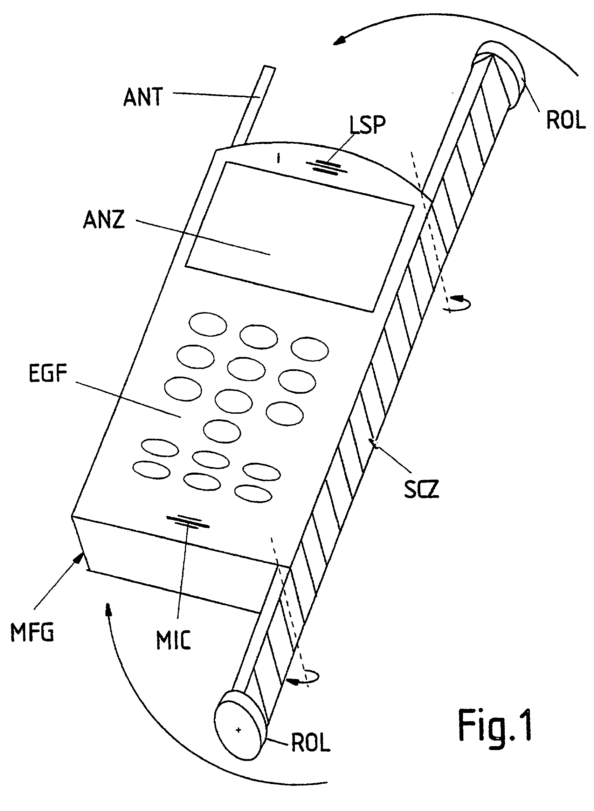

Wie in Fig.1 dargestellt, besitzt ein Mobilfunkgerät nach der Erfindung von außen ersichtlich eine Antenne ANT, eine Anzeige ANZ, z.B. ein sogenanntes LCD-Display, ein Eingabefeld EGF mit Tasten, eine Hörkapsel LSP und ein Mikrophon MIC. Die genannten Elemente sind im allgemeinen bei jedem Mobilfunkgerät zu finden, wogegen gemäß der Erfindung eine Faksimile-Abtasteinrichtung SCZ, hier an der rechten, schmalen Seitenfläche des Gerätes angeordnet ist. Bei der gezeigten Ausführungsform ist die Abtasteinrichtung SCZ nach oben und unten über die eigentliche Gerätelänge hinaus verlängert und besitzt an ihren Enden Rollen ROL. Die Verlängerungsteile können bei Nichtbenutzung der Abtasteinrichtung SCZ beispielsweise um 90 Grad zu dem Gerät eingeklappt werden, was hier durch Pfeile und Achsen nur schematisch angedeutet ist. Aus der lediglich schematischen Darstellung geht auch nicht hervor, daß diese Verlängerungsteile samt den Rollen üblicherweise in dem Gehäuse des Gerätes versenkbar sein werden. Alternativ können die Verlängerungsteile der Abtasteinrichtung SCZ auch in das Gerät eingeschoben werden, falls Sie nicht benötigt werden.

Wenn der Benützer des Mobilfunkgerätes ein Dokument an einen Teilnehmer des Netzes übertragen möchte, so wird er nach Aktivierung der entsprechenden Funktion über das Eingabefeld EGF, das gesamte Gerät mit den beiden Rollen ROL auf das Dokument aufsetzen und dann eine durchegehende Abtastzeile SCZ samt dem Gerät über das zu übertragende Dokument bzw. einen zu übertragenden Teil des Dokumentes ziehen.

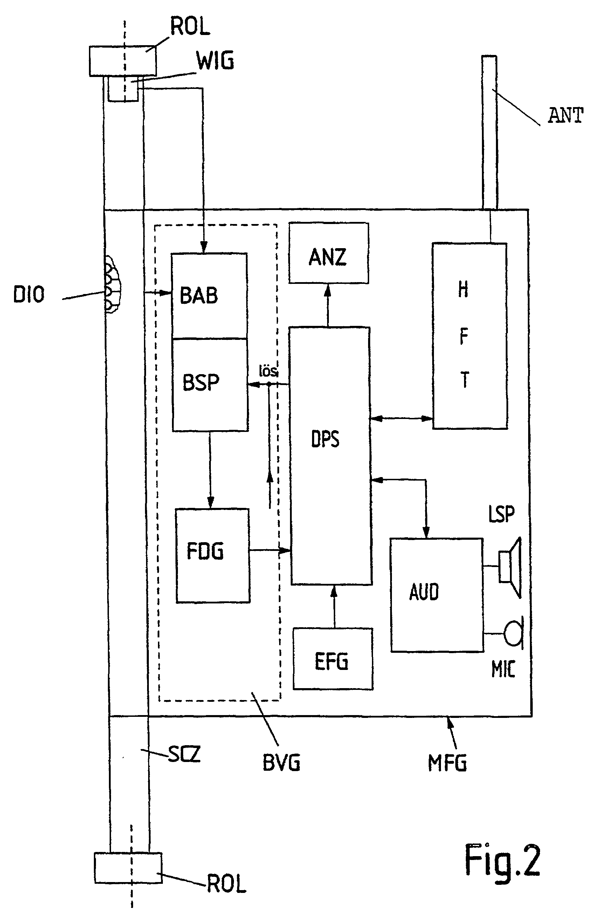

Nun auf Fig.2 kommend, erkennt man, daß das Mobilfunkgerät nach der Erfindung in bekannter Weise einen HF-Teil HFT besitzt, der seinerseits wieder aus einem Empfangs- und einem Sendeteil besteht. Weiters ist ein Audioteil AUD vorgesehen, der mit der Hörkapsel LSP und dem Mikrophon MIC verbunden ist und der zur Audiosignalverarbeitung in beiden Richtungen dient, insbesondere auch einen Vocoder, Dynamikkompressor, etc. enthalten kann. Zur Steuerung des Gerätes ist ein digitaler Signalprozessor DSP vorgesehen, der nicht nur mit dem HF-Teil und dem Audioteil AUD, sondern auch mit der Anzeige ANZ und dem Eingabefeld EGF in Verbindung steht. An der linken Seite des Schaltungsblockes ist schematisch die Abtasteinrichtung SCZ mit ihren Rollen ROL dargestellt. Zumindest eine der Rollen ist mechanisch mit einem Wegstreckenindexgeber WIG gekoppelt, der bei Umdrehungen der Rolle Indeximpulse an eine Bildverarbeitung BVG des Gerätes liefert, nämlich an eine Bildaufbereitung BAB. Dieser Bildaufbereitung BAB werden auch die Ausgangssignale der Abtastzeile SCZ zugeführt, die üblicherweise ein Diodenarray DIO enthält. Der Aufbau der Abtastzeile ist jedoch nicht Gegenstand der Erfindung und dem Fachmann bekannt. Neben der Bildaufbereitung BAB ist im allgemeinen auch ein Bildspeicher BSP vorgesehen, der zur vorübergehenden Speicherung des abgetasteten Bildes bzw. eines Teiles dieses Bildes dient. Das abgespeicherte Bild bzw. Teilbild aus dem Bildspeicher BSP kann sodann einem Faxdatengenerator FDG zugeführt werden, der die Bilddaten bereits in digitaler Form über den Signalprozessor DSP zum Aussenden an den HF-Teil HFT liefert. Entweder automatisch, von dem Signalprozessor DSP gespeichert oder auf einen Befehl des Benutzers durch das Eingabefeld EGF kann ein Löschsignal lös an den Bildspeicher gesandt werden, um diesen wieder frei für ein neues Bild zu machen.

Es ist bevorzugt vorgesehen, daß die Abtasteinrichtung SCZ mit dem Mobilfunkgerät MFG bzw. dessen Gehäuse eine mechanische Einheit bildet, da hierdurch das händische Abtasten eines Dokumentes äußerst einfach durchgeführt werden kann. Gegebenenfalls kann alternativ oder zusätzlich auch vorgesehen sein, daß die Abtasteinrichtung SCZ von dem Gehäuse des Mobilfunkgerätes MFG gelöst oder lösbar ist und mit diesem über ein Kabel oder drahtlos in Verbindung steht. Es ist auch nicht unbedingt erforderlich, die hier gezeigten Verlängerungsstücke vorzusehen, soferne man sich entweder auf kleinere Dokumente beschränkt oder beispielsweise ein streifenartiges Abtasten des Dokumentes vorsieht. Die bei dem Stand der Technik entsprechenden Handabtasteinheiten vorgesehenen Kontroll- und Anzeigemechanismen können natürlich im Rahmen der Erfindung Verwendung finden, um beispielsweise ein fehlerhaftes Abtasten eines Dokumentes anzuzeigen. Ebenso ist es möglich, zumindest Teile des Dokuments nach der Abtastung auf der Anzeige ANZ zur Kontrolle anzuzeigen.

Wenngleich üblicherweise das Mobilfunkgerät zur Sprachübertragung eingerichtet ist, sollte es klar sein, daß für die Realisierung das Audioteil mit Mikrophon und/oder Hörkapsel nicht unbedingt erforderlich ist. Im Rahmen der Erfindung soll unter dem Begriff "Mobilfunkgerät" nicht nur ein "Handy", beispielsweise nach dem GSM-System, verstanden werden, sondern nach anderen Systemen arbeitende Mobilfunkgeräte, z.B. eines UMTS-Systems(=Universal Mobile Telecommunications System) ebenso, wie Schnurlostelefone, z.B. im DECT-System.

## Patentansprüche

1. Mobilfunkgerät mit einem Hochfrequenzteil (HFT), mit einem digitalen Signalprozessor (DSP), mit einer Antenne (ANT), mit gegebenenfalls einem Audioteil (AUD) mit einer Hörkapsel (LSP) und einem Mikrophon (MIC) und mit einer Faksimile-Zeilenabtasteinrichtung (SCZ), die über eine Bildverarbeitung (BVG) mit dem Signalprozessor (DSP) in Verbindung steht, wobei Bildverarbeitung und Signalprozessor dazu eingerichtet sind, ein von der Abtasteinrichtung abgetastetes Bild zumindest teilweise zwischenzuspeichern und in digitaler Form über den Hochfrequenzteil (HFT) auszusenden,
**dadurch gekennzeichnet,**
**daß** die Abtasteinrichtung (SCZ) derart ausklappbar oder ausziehbar ist, daß sie ausgeklappt bzw. ausgezogen eine durchgehende Abtastzeile aufweist deren Gesamtlänge im ausgeklappten oder ausgezogenen Zustand größer ist als die größte Geräteabmessung.

2. Mobilfunkgerät nach Anspruch 1,
**dadurch gekennzeichnet, daß** die Abtasteinrichtung (SCZ) gerätefest angeordnet ist.

3. Mobilfunkgerät nach Anspruch 2,
**dadurch gekennzeichnet, daß** die Abtasteinrichtung (SCZ) in einer Seitenfläche des Gerätes untergebracht ist.

4. Mobilfunkgerät nach einem der Ansprüche 1 bis 3,
**dadurch gekennzeichnet, daß** die Abtasteinrichtung (SCZ) zumindest an einem Ende einen mit einer Rolle (ROL) gekoppelten Wegstreckenindexgeber (WIG) aufweist.

5. Mobilfunkgerät nach einem der Ansprüche 1 bis 4,
**dadurch gekennzeichnet, daß** die Bildverarbeitung (BVG) eine Bildaufbereitung (BAB), einen Bildspeicher (BSP) sowie einen Faxdatengenerator (FDG) besitzt.

6. Mobilfunkgerät nach Anspruch 4 und Anspruch 5,
**dadurch gekennzeichnet, daß** die Signale der Abtasteinrichtung (SCZ) sowie des Indexgebers (WIG) der Bildaufbereitung (BAB) zugeführt sind.

## Claims

1. Mobile radio having a radio-frequency part (HFT), having a digital signal processor (DSP), having an antenna (ANT), possibly having an audio part (AUD) with an earphone (LSP) and a microphone (MIC) and having a facsimile line-scanning device (SCZ) connected to the signal processor (DSP) via an image processing unit (BVG), the image processing unit and the signal processor being set up to buffer-store at least part of an image scanned by the scanning device and to transmit it in digital form using the radio-frequency part (HFT),
**characterized**
**in that** the scanning device (SCZ) can be opened out or pulled out such that, when opened out or pulled out, it has a continuous scanning strip whose overall length in the opened-out or pulled-out state is greater than the largest appliance dimension.

2. Mobile radio according to Claim 1,
**characterized in that** the scanning device (SCZ) is arranged so as to be fixed on the appliance.

3. Mobile radio according to Claim 2,
**characterized in that** the scanning device (SCZ) is accommodated in a lateral face of the appliance.

4. Mobile radio according to one of Claims 1 to 3,
**characterized in that** at least one end of the scanning device (SCZ) has a distance indexer (WIG) coupled to a roller (ROL).

5. Mobile radio according to one of Claims 1 to 4,
**characterized in that** the image processing unit (BVG) has an image conditioning unit (BAB), an image store (BSP) and a fax data generator (FDG).

6. Mobile radio according to Claim 4 and Claim 5,
**characterized in that** the signals from the scanning device (SCZ) and from the indexer (WIG) are supplied to the image conditioning unit (BAB).

## Revendications

1. Téléphone portable ayant un bloc haute fréquence (HFT), un processeur numérique de signaux (DSP), une antenne (ANT), le cas échéant, un bloc audio (AUD) avec un écouteur (LSP) et un microphone (MIC) et un dispositif de lecture de lignes de télécopie (SCZ), qui est en liaison, par l'intermédiaire d'un dispositif de traitement des images (BVG), avec le processeur de signaux (DSP), le dispositif de traitement des images et le processeur de signaux étant conçus pour mémoriser en tampon, au moins partiellement, une image lue par le dispositif de lecture et l'émettre, sous une forme numérique, par l'intermédiaire du bloc haute fréquence (HFT)
**caractérisé par le fait**
**que** le dispositif de lecture (SCZ) peut être déplié ou extrait de telle manière qu'il comporte, dans la position dépliée ou extraite, une ligne continue de lecture, dont la longueur totale, en position dépliée ou extraite, est supérieure à la dimension la plus grande de l'appareil.

2. Téléphone portable selon la revendication 1
**caractérisé par le fait**
**que** le dispositif de lecture (SCZ) est monté de façon immuable sur le téléphone.

3. Téléphone portable selon la revendication 2
**caractérisé par le fait**
**que** le dispositif de lecture (SCZ) est logé sur une surface latérale du téléphone.

4. Téléphone portable selon l'une des revendications 1 à 3
**caractérisé par le fait**
**que** le dispositif de lecture (SCZ) comporte au moins à une de ses extrémités un émetteur d'indices du trajet parcouru (WIG), couplé à un rouleau (ROL).

5. Téléphone portable selon l'une des revendications 1 à 4
**caractérisé par le fait**
**que** le dispositif de traitement des images (BVG) possède un convertisseur d'images (BAB), une mémoire d'images (BSP), ainsi qu'un générateur de données de télécopie (FDG).

6. Téléphone portable selon la revendication 4 et la revendication 5
**caractérisé par le fait**
**que** les signaux du dispositif de lecture (SCZ), ainsi que de l'émetteur d'indices (WIG) sont transmis au convertisseur d'images (BAB).
